# EUROPEAN PATENT SPECIFICATION

(11) **EP 0 369 636 B1**
(45) Date of publication and mention of the grant of the patent: **15.06.1994**
(21) Application number: 89311219.3
(22) Date of filing: 31.10.1989
(51) Int. Cl.: C09D 11/00

(54) **Fluorescent inks**
Fluoreszierende Tinten
Encres fluorescentes

(30) Priority: 07.11.1988 US 268130
(43) Date of publication of application: 23.05.1990
(73) Proprietor: PITNEY BOWES, INC., Stamford Connecticut 06926-0700 (US)
(72) Inventor: Sarada, Thyagaraj, Norwalk, CT 06851 (US); Hochwalt, Norman C., West Carrollton, OH 45449 (US)
(74) Representative: Cook, Anthony John

(56) References cited:
- US-A- 4 264 366
- DATABASE WPIL, Derwent Publications Ltd., London (GB); no. 87-133467#

## Description

There are certain situations in which a fluorescent ink is used for detecting purposes. Such fluorescent inks will have one color, such as black or red, when viewed in ambient light, but upon being exposed to ultraviolet light, will display another color such as green or yellow. Examples of where such inks can be used is in the machine processing of various types of information on tickets, tags, labels, postage indicia or imprints, and the like. In the case of postage indicia, facer canceller tables and metered mail handling equipment are fitted with luminescent ink detecting devices that expose the postage indicia to an ultraviolet light during the automatic processing of mail. If the specified luminescent signal is not viewed during exposure, the postal clerk is required to hand cancel the postage indicia.

Fluorescent inks that have been used in postage meters to print postage indicia in the past have worked well, but they have certain short-comings. The composition of these fluorescent inks has been in the form of a dispersion. In such dispersions, one has to control the particle sizes and agglomeration size in order to prevent settling. In short, there is always a settling problem in dispersion inks, particularly when one recognizes that coloring toners and fluorescent pigments can settle at different rates. It has long been recognized that a fluorescent ink in solution form would be more desirable because of its advantageous properties of Newtonian viscosities that are not dependent on shear rates under normal conditions. Thus, the flow properties of solutions can be controlled more easily than dispersions. To date no adequate solution fluorescent ink has been found because certain properties are required that could not be achieved in the past. Fluorescent inks require a high boiling temperature and low freezing point. Also, they should have a low evaporation rate. In addition, they should have a long shelf life, and high stability despite having a relatively large number of components. It should also be noted that in a postage meter, inks are constantly moving, and therefore it is advantageous for the ink to be a homogeneous fluid. Particularly, the fluid should not clog the printing system since no cleaning or maintenance is available to the user of a postage meter due to security reasons.

A solution fluorescent ink has been discovered that is formulated by the use of polar organic solvents. The solvent normally makes up 60 to 90% of the solution and the soluble fluorescent resin accounts for 10-40% of the ink. Preferably, not more than 5% of toning dye is added to the solution. Viscosity modifiers and luminescence enhancers can be added as needed. It has been found preferable to have a combination of fluorescent resins and polar organic solvents such as triethylene glycol, glycerine and glycol ethers, for example.

In this specification, percentages are by weight unless otherwise stated.

More particularly, according to the invention, there is provided a fluorescent ink, comprising, by weight
10 to 40% soluble fluorescent toner, 60 to 85% polar organic solvent, and 5% or less dye; with, optionally, up to 5% in total of viscosity modifiers, print quality enhancers, and fluorescence enhancers; wherein said polar organic solvent has a boiling point greater than 250°C and a vapour pressure less than 0.05 mm Hg at normal ambient temperature.

### Detailed Description of the Preferred Embodiments

Fluorescent inks of the solution type have been formulated by using polar organic solvents to which fluorescent toners are added. The polar organic solvent should have a matching polarity to the fluorescent resin with which it is used, have a boiling point of greater than 250° C, low vapor pressure at ambient, i.e. less than 0.05 mm of mercury and should be water-tolerant but not absorb water.

For purposes of this invention, polar organic solvents are defined as those solvents that have a total solubility parameter, S₁, of approximately 18 to 32. Reference can be had to page 156 of the CRC Handbook of Solubility Parameters and Other Cohesion Parameters (1983) published by CRC Press, Inc., Boca Raton, Florida. Solvents which have been found suitable are triethylene glycol, glycerine, ethylene glycol phenyl-ether, tripropylene glycol methyl-ether and tripropylene glycol. The solvents will constitute 60 to 90% of the solution. The fluorescent resins will constitute 10 to 40% of the solution and should be polar resins such as amino - aldehyde plastics or polyesters. Fluorescent resins which have been found suitable are FC 1206 (4029) available from Radiant Color Div., Magruder Corp. Richmond, California, Ra 4030 and Ra 4031 also available from Radiant Color and Ax and HMS series resins available from Dayglo Color Corp., Cleveland, Ohio. The toning or coloring dyes should constitute less than 5% of the solution, preferably less than 3%. Other additives such as viscosity modifiers, print quality enchancers and fluorescence enhancers can be used, up to 5% as needed. Examples of such formulations are as follows:

### Example 1

| Ingredient | Amount |
|---|---|
| Triethylene glycol (TEG) | 20 |
| Glycerine | 20 |
| Ethylene glycol phenyl-ether (EPH) | 10 |
| Tripropylene glycol methyl-ether (TPM) | 20 |
| Fluorescent resin such as FC 1206 | 25 |
| p - Toluene Sulfonamide | 5 |
| | 1̅0̅0̅%̅ |

### Example 2

| Ingredient | Amount |
|---|---|
| Klucel | 3% |
| FC 1206 | 10% |
| Tripropylene glycol methyl-ether (TPM) | 85% |
| Tributyl phosphate | 2% |

Klucel is a viscosity modifier available from Hercules Corp., Wilmington, Delaware.

### Example 3

| | |
|---|---|
| Ra - 4029 | 9.0% |
| Ra - 4030 | 4.0% |
| Diethylene Glycol | 21.0% |
| Ketjenflex | 53.0% |
| AX - 8800-5 Magenta | 9.0% |
| AX - 17N Yellow | 4.0% |

Ketjenflex is a solvent composed of p-toluene sulfonamide, o-toluene sulfonamide and substituted sulfonamides available from Akzo Chemical Co., and AX-8800-5 Magenta and AX-17N yellow are fluorescent resins available from Dayglo Color Corp.

### Example 4

| | |
|---|---|
| Ra 4029 | 16% |
| Ra 4030 | 4% |
| Oleic Acid | 10% |
| Neptun Yellow 076 Dye | 0.93% |
| Neptun Red 543 Dye | 0.562% |
| Tripropylene Glycol | 45.5% |
| Triethylene Glycol | 23% |

Neptun yellow 076 Dye and Keptun Red 543 Dye are available from BASF.

### Example 5

| | |
|---|---|
| Ra 4029 | 20% |
| Yel 4030 | 5% |
| Tripropylene Glycol | 25% |
| G-4031 Radiant CHEM | 5% |
| Ameroxol - Amerchol Corp. (oleyl alcohol ethyo lates) | 5% |
| G-2109, (polyoxyethylene C₁₂ fatty acid available from ICI Americas) | 40% |

The above inks were tested in conditions that simulated the conditions of a postage meter and were found to be satisfactory in terms of printing postage indicia, shelf-life, and resistance to temperature extremes. Most importantly, the components of the ink did not settle when the inks were not in use.

## Claims

1. A fluorescent ink, comprising, by weight:
10 to 40% soluble fluorescent toner, 60 to 85% polar organic solvent, and 5% or less dye; with, optionally, up to 5% in total of viscosity modifiers, print quality enhancers, and fluorescence enhancers; and wherein said polar organic solvent has a boiling point greater than 250°C and a vapour pressure less than 0.05 mm Hg at normal ambient temperature.

2. A fluorescent ink according to claim 1 wherein said solvent is selected from triethylene glycol, glycerine, tripropylene glycol methyl-ether, tripropylene glycol and ethylene glycol phenyl-ether.

3. A fluorescent ink comprising, by weight:
20% triethylene glycol, 20% glycerine, 10% ethylene glycol phenyl-ether, 20% tripropylene glycol methyl-ether, 25% resin and 5% p-toluene sulfonamide; with, optionally, up to 5% in total of viscosity modifiers, print quality enhancers, and fluorescence enhancers.

4. A fluorescent ink, comprising, by weight:
3% viscosity modifier, 10% soluble fluorescent resin, 85% tripropylene glycol methyl-ether and 2% tributyl phosphate; with optionally, up to 5% in total of viscosity modifiers, print quality enhancers, and fluorescence enhancers.

5. A fluorescent ink consisting of, by weight:
9% Ra-4029, 4% Ra-4030, 21% diethylene glycol, 53% ketjenflex, 9% AX-8800-5 magneta, and 4% AX-17N yellow.

6. A fluorescent ink consisting of, by weight:
16% Ra-4029, 4% Ra-4030, 10% oleic acid, 0.93% neptun yellow 076 dye, 0.562% neptun red 543 dye, 45.5% tripropylene glycol, and 23% triethylene glycol.

7. A fluorescent ink consisting of, by weight:
20% Ra-4029, 5% yel 4030, 25% tripropylene glycol, 5% G-4031 radiant CHEM ameroxol, and 40% G-2109.

## Patentansprüche

1. Fluoreszierende Tinte, umfassend 10 bis 40 Gew.-% löslichen, fluoreszierenden Toner, 60 bis 85 Gew.-% polares organisches Lösungsmittel und 5 Gew.-% oder weniger Farbstoff; mit, fakultativ, insgesamt bis zu 5 Gew.-% Viskositätsverbesserern, Druckqualitätsverbesserern und Fluoreszenzverstärkern; und wobei das organische Lösungsmittel einen Siedepunkt, der über 250°C liegt, und einen Dampfdruck von weniger als 0,05 mm Hg bei normaler Umgebungstemperatur hat.

2. Fluoreszierende Tinte nach Anspruch 1, bei der das Lösungsmittel unter Triethylenglykol, Glycerin, Tripropylenglykolmethylether, Tripropylenglykol und Ethylenglykolphenylether ausgewählt ist.

3. Fluoreszierende Tinte, umfassend 20 Gew.-% Triethylenglykol, 20 Gew.-% Glycerin, 10 Gew.-% Ethylenglykolphenylether, 20 Gew.-% Tripropylenglykolmethylether, 25 Gew.-% Harz und 5 Gew.-% p-Toluolsulfonamid; mit, fakultativ, insgesamt bis zu 5 Gew.-% Viskositätsverbesserern, Druckqualitätsverbesserern und Fluoreszenzverstärkern.

4. Fluoreszierende Tinte, umfassend 3 Gew.-% Viskositätsverbesserer, 10 Gew.-% lösliches fluoreszierendes Harz, 85 Gew.-% Tripropylenglykolmethylether und 2 Gew.-% Tributylphosphat; mit, fakultativ, insgesamt bis zu 5 Gew.-% Viskositätsverbesserern, Druckqualitätsverbesserern und Fluoreszenzverstärkern.

5. Fluoreszierende Tinte, bestehend aus 9 Gew.-% Ra-4029, 4 Gew.-% Ra-4030, 21 Gew.-% Diethylenglykol, 53 Gew.-% Ketjenflex, 9 Gew.-% AX-8800-5 Magenta und 4 Gew.-% AX-17N Gelb.

6. Fluoreszierende Tinte, bestehend aus 16 Gew.-% RA-4029, 4 Gew.-% Ra-4030, 10 Gew.-% Ölsäure, 0,93 Gew.-% Farbstoff Neptungelb 076, 0,562 Gew.-% Farbstoff Neptunrot 543, 45,5 Gew.-% Tripropylenglykol und 23 Gew.-% Triethylenglykol.

7. Fluoreszierende Tinte, bestehend aus 20 Gew.-% Ra-4029, 5 Gew.-% Yel 4030, 25 Gew.-% Tripropylenglykol, 5 Gew.-% Radiant CHEM Ameroxol und 40 Gew.-% G-2109.

## Revendications

1. Encre fluorescente comprenant, en poids:
de 10 à 40% de pigment pur fluorescent soluble, de 60 à 85% de solvant organique polaire et 5% ou moins de colorant; avec, facultativement, jusqu'à 5% au total de modificateurs de Viscosité, améliorateurs de la qualité d'impresion et améliorateurs de fluorescence; et où ledit solvent organique polaire a un point d'ébullition supérieur à 250°C et une pression de vapeur inférieure à 0,05 mm Hg à la température ambiante normale.

2. Encre fluorescente selon la revendication 1 dans laquelle ledit solvant est choisi parmi le triéthylène glycol, la glycérine, l'éther méthylique de tripropylène glycol, le tripropylène glycol et l'éther phénylique d'éthylène glycol.

3. Encre fluorescente comprenant, en poids:
20% de triéthylène glycol, 20% de glycérine, 10% d'éther phénylique d'éthylène glycol, 20% d'éther méthylique de tripropylène glycol, 25% de résine et 5% de p-toluène sulfonamide; avec, facultativement, jusqu'à 5% au total de modificateurs de viscosité, d'améliorateurs de la qualité d'impression et d'améliorateurs de fluorescence.

4. Encre fluorescente comprenant, en poids:
3% de modificateur de viscosité, 10% de résine fluorescente soluble, 85% dd'éther méthylique de tripropylène glycol et 2% de phosphate de tributyle; avec, facultativement, jusqu'à 5% au total de modificateurs de viscosité, d'améliorateurs de la qualité d'impression et d'améliorateurs de fluorescence.

5. Encre fluorescente constituée de, en poids:
9% de Ra-4029, 4% de Ra-4030, 21% de diéthylène glycol, 53% de ketjenflex, 9% d'AX-8800-5 magenta et 4% d'AX-17N jaune.

6. Encre fluorescente constituée de, en poids:
16% de Ra-4029, 4% de Ra-4030, 10% d'acide oléique, 0,93%de colorant neptun jaune 076, 0,562% de colorant neptun rouge 543, 45,5% de tripropylène glycol et 23% de triéthylène glycol.

7. Encre fluorescente constituée de, en poids:
20% de Ra-4029, 5% de yel 4030, 25% de tripropylène glycol, 5% de G-4031 radiant CHEM ameroxol et 40% de G-2109.
